# FASCICULE DE BREVET EUROPEEN

(11) **EP 2 734 427 B1**
(45) Date de publication et mention de la délivrance du brevet: **07.11.2018**
(21) Numéro de dépôt: 12735537.8
(22) Date de dépôt: 16.07.2012
(51) Int. Cl.: B60T 13/74

(54) **DISPOSITIF D'ASSISTANCE AU FREINAGE POUR VEHICULE AUTOMOBILE**
BREMSHILFEVORRICHTUNG FÜR EIN KRAFTFAHRZEUG
BRAKE ASSIST DEVICE FOR A MOTOR VEHICLE

(30) Priorité: 18.07.2011 FR 1102230
(43) Date de publication de la demande: 28.05.2014
(73) Titulaire: Robert Bosch GmbH, 70442 Stuttgart (DE)
(72) Inventeur: RICHARD, Philippe, F-77500 Chelles (FR); GAFFE, Francois, F-44420 La Turballe (FR); CAGNAC, Bastien, F-60660 Cramoisy (FR)
(86) Numéro de dépôt international: PCT/EP2012/063893
(87) Numéro de publication internationale: WO 2013/010982

(56) Documents cités:
- DE-A1-102007 018 469
- US-A1- 2002 158 510
- US-A1- 2009 115 242

## Description

### DOMAINE TECHNIQUE DE L'INVENTION

La présente invention se rapporte à un dispositif d'assistance au freinage pour véhicule automobile. L'invention se rapporte plus particulièrement à l'intégration d'un capteur de position d'une partie mobile d'un servomoteur.

Le dispositif d'assistance au freinage pour véhicule automobile comportant un maître cylindre, une tige de commande, un équipage mobile et un corps de valve recevant un plongeur, dans lequel
- l'équipage est un cylindre creux adapté à être mu en translation par un motoréducteur, via une vis sans fin et un engrenage réducteur,
- le plongeur est adapté à être mu en translation par la tige reliée à une pédale de frein destinée à être actionnée par un conducteur,
- à son extrémité opposée à la tige, le corps de valve comporte un palpeur adapté à appuyer sur un disque de réaction du maître cylindre de manière à augmenter une pression hydraulique dans le maître cylindre, cette augmentation pilotant le freinage,
- un capteur de position du plongeur comporte un détecteur fixé sur une partie immobile du véhicule et une cible entraînée par l'équipage,
- une unité de commande adaptée à calculer une position du corps de valve et à piloter le palpeur en fonction de cette position.

### ARRIERE PLAN TECHNOLOGIQUE DE L'INVENTION

Un tel dispositif d'assistance au freinage, à part ladite vis sans fin et ladite cible entraînée par l'équipage, est connu selon le document US 2002/0158510 A1.

On connaît des dispositifs d'assistance de freinage comportant un servomoteur électrique relié à un maître cylindre. Ce servomoteur électrique comporte, par exemple, un boîtier comprenant un équipage mobile apte à venir se déplacer en translation par l'intermédiaire d'un engrenage réducteur à vis sans fin. Cette vis sans fin est entraînée en rotation par l'intermédiaire d'un motoréducteur piloté par une unité de commande. Le servomoteur est actionné par une tige de commande déplacée à une première extrémité par une pédale de frein. La tige de commande comporte à une deuxième extrémité un plongeur. Ce plongeur est apte à se loger dans un évidement d'un corps de valve de sorte que le déplacement du corps de valve en direction du maître cylindre entraîne une interaction d'un palpeur du servomoteur avec un disque de réaction du maître cylindre. L'interaction du palpeur sur le maître cylindre entraîne une augmentation de pression dans le maître cylindre provoquant ainsi l'activation du freinage des roues.

Pour piloter le déplacement de l'équipage mobile, le motoréducteur est connecté à une unité de commande. Cette unité de commande reçoit également des informations, notamment celles concernant la position exacte du corps de valve fournies au moyen d'un capteur de position. Au moyen de ce capteur, l'unité de commande peut déterminer à tout moment une différence entre la consigne d'effort appliquée par le conducteur sur la pédale de frein et la position effective du corps de valve. Cette différence constitue une erreur différentielle. La connaissance de cette erreur à tout moment permet de réaliser un asservissement en position de l'équipage mobile.

Toutefois, actuellement, ce capteur de position est monté directement sur une pièce mobile, en l'occurrence le corps de valve. La présence de ce capteur sur cette pièce mobile nécessite un câble mobile en permanence, reliant le capteur à l'unité de commande. En outre, lorsque le capteur tombe en panne, il n'est pas possible de démonter le servomoteur pour changer le capteur. Il est donc nécessaire de changer le servomoteur dans son ensemble, uniquement parce que le capteur est défectueux. De plus, il existe des problèmes de robustesse et d'usure du capteur du fait que ce dernier est amené à effectuer de nombreuses courses lors du déplacement de la pièce sur laquelle il est monté.

### DESCRIPTION GENERALE DE L'INVENTION

L'invention a donc pour but de résoudre ces inconvénients de l'état de la technique. L'invention offre une alternative plus simple et plus économique à l'utilisation d'un tel capteur. Selon l'invention, le capteur à effet Hall, comporte un détecteur fixe et une cible, avantageusement magnétique, de détection entraînée par l'équipage mobile. Ainsi, la position de la cible de détection est une fonction de préférence affine de la position de l'équipage mobile, ce qui permet de déterminer une course absolue du plongeur par rapport au corps de valve.

Le capteur est un capteur à effet Hall adapté à mesurer la vitesse et l'amplitude de déplacement du plongeur. L'unité de commande est en outre adaptée à
- calculer une indexation angulaire d'un rotor du motoréducteur et à utiliser un rapport de transmission prédéterminé du réducteur pour en déduire la position du corps de valve,
- comparer la position du plongeur et la position du corps de valve, et
- piloter en fonction de la comparaison et de la vitesse de déplacement le motoréducteur.

Selon des caractéristiques particulières,
- le palpeur présente un diamètre sensiblement identique à un diamètre extérieur de l'équipage mobile de manière à s'interposer entre l'équipage mobile et le maître cylindre,
- la cible est fixée sur le plongeur et comporte au moins un circuit magnétique adapté à la spectrométrie de rétrodiffusion Rutherford,
- le capteur est adapté à la technologie multivariable digitale et à la spectrométrie de rétrodiffusion Rutherford de manière à localiser le circuit magnétique.

Selon des caractéristiques particulières,
- le circuit magnétique est encapsulé dans une réglette montée solidairement à un bras support, la réglette s'étendant suivant un axe parallèle à un axe central suivant lequel s'étendent l'équipage mobile, le corps de valve, le plongeur et la tige de commande,
- le disque de réaction, le palpeur et le bras s'étendent perpendiculairement aux axes,
- le plongeur comporte à une première extrémité, opposée au maître cylindre, un évidement central sphérique passant par l'axe central suivant lequel le plongeur s'étend, l'évidement étant apte à recevoir un embout sphérique de la tige,
- le plongeur comporte en outre, à cette même extrémité, au moins une portion d'un disque concentrique par rapport au plongeur et de diamètre sensiblement identique à un diamètre extérieur du corps de valve, le disque comportant un orifice central permettant de laisser traverser une extrémité, opposée à la pédale de frein, de la tige de commande.

Selon des caractéristiques particulières,
- l'équipage mobile comporte un évidement circonférentiel apte à recevoir la réglette dans toute sa longueur et toute son épaisseur,
- un ressort de rappel est placé entre une extrémité de l'évidement et le bras support,
- un orifice rectangulaire est aménagé dans une paroi de l'équipage mobile, la paroi séparant le corps de valve de la réglette,
- l'orifice présente une largeur adaptée correspondant à une largeur du bras support et une longueur correspondant à un débattement de la réglette au sein de l'évidement.

Selon des caractéristiques particulières,
- le plongeur présente, à l'extrémité opposée au maître cylindre, un évidement circonférentiel plat,
- une partie circonférentielle du disque du plongeur est supprimée de façon rectiligne de manière à ce que le disque présente un bord plat coplanaire vis-à-vis de l'évidement circonférentiel plat,
- lorsque le plongeur est en translation dans une direction opposée au maître cylindre, le bras support sert de butée au plongeur, le contact entre le bras support et le plongeur ayant lieu à une extrémité de l'évidement.

Selon des caractéristiques particulières,
- le bras support est monté solidairement et perpendiculairement à une première extrémité d'une tige de guidage, l'ensemble réglette magnétique, bras support et tige de guidage formant un U,
- le plongeur et son disque comportent chacun un alésage excentré par rapport à l'axe central suivant lequel le plongeur et le disque s'étendent, chaque alésage étant apte à recevoir la tige de guidage dans toute sa longueur, le diamètre de l'alésage du disque état inférieur au diamètre de l'alésage du plongeur,
- la tige de guidage comporte à une deuxième extrémité une butée configurée de sorte qu'un ressort de rappel est placé entre la butée et l'alésage du disque,
- lorsque l'équipage est en translation dans une direction opposée au maître cylindre, le bras support sert de butée à l'équipage.

Selon des caractéristiques particulières,
- l'indexation angulaire du rotor est calculée en fonction d'un index prédéterminé stocké dans une mémoire de données de l'unité de commande, et d'un angle de rotation du rotor mesuré et transmis à l'unité par un résolveur,
- le palpeur présente un diamètre sensiblement identique à un diamètre extérieur de l'équipage mobile de manière à s'interposer entre l'équipage mobile et le maître cylindre,
- le pilotage du motoréducteur est configuré de sorte que
   - lorsque le conducteur freine, l'équipage exerce, via le palpeur, une pression adéquate sur le maître cylindre,
   - lorsque le conducteur ne freine pas, l'équipage soit dans une position dite de repos, écartée par rapport au maître cylindre.

L'invention a également pour objet un véhicule de type automobile caractérisé en ce qu'il comporte un tel dispositif.

L'invention sera mieux comprise à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- figures 1 et 2 : deux représentations schématiques d'une vue d'ensemble partiellement en coupe d'un premier mode de réalisation du dispositif selon l'invention ;
- figures 3 et 5 : deux représentations schématiques d'une vue d'ensemble partiellement en coupe d'un deuxième mode de réalisation du dispositif selon l'invention ;
- figure 4 : une représentation schématique d'une vue de face en coupe d'un servomoteur du deuxième mode de réalisation du dispositif selon l'invention ;
- figure 6 : une représentation, sous forme d'un logigramme, d'un mode de réalisation du procédé selon l'invention.

Dans ces figures, les éléments identiques conservent la même référence d'une figure à l'autre.

### DESCRIPTION DETAILLEE DES FORMES DE REALISATION PREFEREES DE L'INVENTION

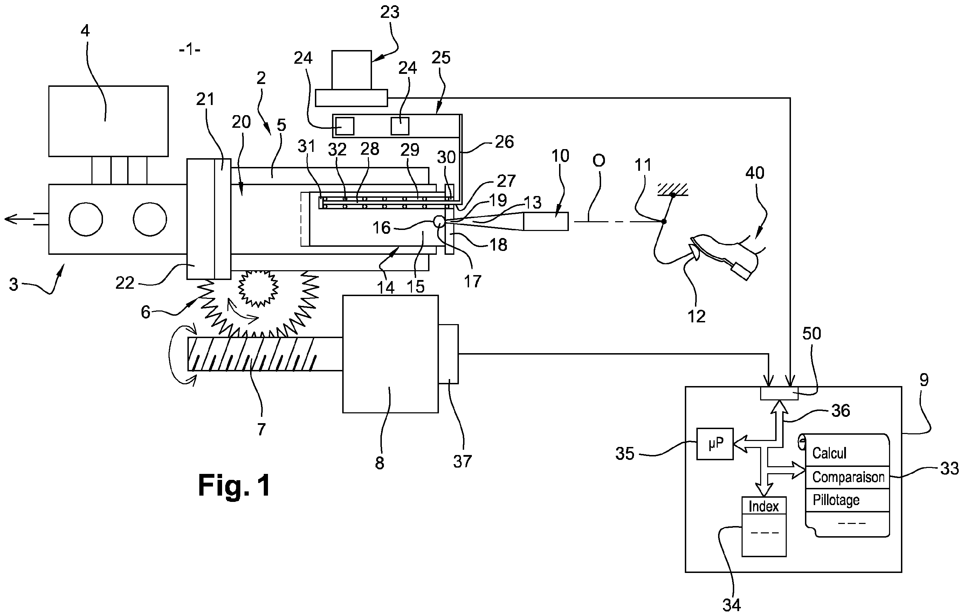

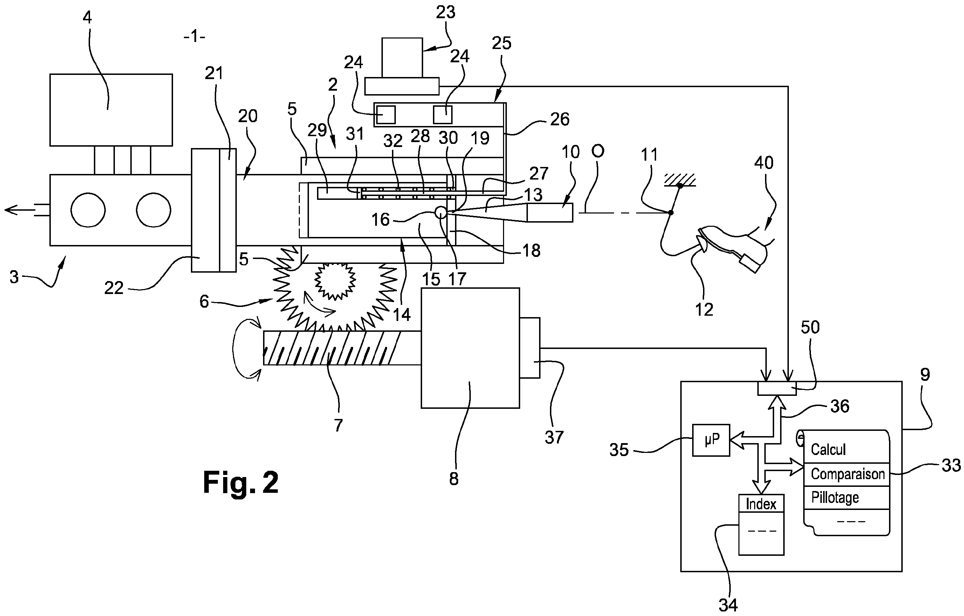

Les figures 1 et 2 illustrent un premier mode de réalisation du dispositif 1 d'assistance de freinage selon l'invention. Le dispositif 1 comporte un servomoteur électrique 2 relié à un maître cylindre 3 muni d'un réservoir 4 de fluide hydraulique. Ce servomoteur 2 électrique comporte un équipage mobile 5 apte à se déplacer en translation dans un mode de fonctionnement dit normal du dispositif 1 montré sur la figure 1. De préférence, la translation de l'équipage mobile 5 s'effectue par l'intermédiaire d'un engrenage 6 réducteur à vis sans fin 7. Cette vis sans fin 7 est entrainée en rotation par l'intermédiaire d'un motoréducteur 8 piloté par une unité de commande 9. Le servomoteur 2 est actionné par une tige de commande 10 déplacée à une première extrémité 11 par une pédale de frein 12. La tige de commande 10 comporte une deuxième extrémité 13 sur laquelle est monté solidairement un plongeur 14. Dans l'exemple, la deuxième extrémité 13 de la tige 10 est tronconique.

Ce plongeur 14 se présente sous la forme générale d'un cylindre plein d'axe O. Le plongeur 14 comporte à une première extrémité 15 un évidement central sphérique 16 passant par l'axe O. Cet évidement central 16 est apte à recevoir un embout sphérique 17 de la tige 10. Le corps du plongeur 14 comporte également à cette même extrémité 15 un disque 18, de sorte que le plongeur 14 et le disque 18 sont concentriques. Ce disque 18 comporte un orifice central 19 permettant de laisser traverser l'extrémité 13 de la tige de commande 10. L'embout 17 est apte à se solidariser à l'extrémité 13, par exemple par vissage. Le disque 18 est solidaire du plongeur 14, de sorte que l'ensemble tige de commande 10 avec plongeur 14 forme un tout rigide. Le plongeur 14 est apte à se loger dans un évidement 19 d'un corps de valve 20 concentrique au plongeur 14, de sorte que le déplacement du corps de valve 20 en direction du maître-cylindre 3 entraîne une interaction d'un palpeur 21 du corps de valve avec un disque de réaction 22 du maître cylindre 3. L'interaction du palpeur 21 sur le maitre-cylindre 3 entraîne une augmentation de pression hydraulique dans le maître-cylindre 3 provoquant ainsi l'activation du freinage des roues (non représentée).

Le dispositif 1 selon l'invention comporte en outre, un capteur permettant de déterminer, au moyen de l'unité de commande 9, la course différentielle entre le plongeur 14 et le corps de valve 20. Ce capteur est de préférence un capteur à effet Hall et comporte un détecteur 23 fixé sur une partie immobile du véhicule, typiquement le corps (non représenté) du servomoteur 2, et une cible 24 entraînée par l'équipage. Le détecteur 23 est apte à détecter la présence de circuits magnétiques de la cible 24 encapsulés dans une réglette 25, que l'on appellera par la suite réglette magnétique 25. Dans l'exemple des figures 1 et 2, la réglette magnétique 25 comporte deux circuits magnétiques 24 espacés d'une longueur prédéterminée.

Cette réglette magnétique 25 est montée solidairement et perpendiculairement à un bras support 26. Ce bras support 26 est monté lui-même solidairement et perpendiculairement à une première extrémité 27 d'une tige de guidage 28. L'ensemble réglette magnétique 25, bras support 26 et tige de guidage 28 forme un U.

Dans ce mode de réalisation, le plongeur 14 comporte un alésage 29 excentré par rapport à l'axe O et apte à recevoir la tige de guidage 28 dans toute sa longueur. Le disque 18 est de préférence de diamètre sensiblement identique au diamètre extérieur du corps de valve 20. Ce disque 18 comporte un orifice excentré 30 par rapport à l'orifice central 19 apte à laissé traverser la tige de guidage 28. Le diamètre de l'orifice excentré 30 est inférieur au diamètre de l'alésage 29. La tige de guidage 28 comporte à une deuxième extrémité une butée 31 configurée de sorte qu'un ressort de rappel 32 est placé entre la butée 31 et l'orifice excentré 30.

L'unité de commande 9 comporte une interface 50, une mémoire programme 33 et une mémoire de données 34 connectées à un microprocesseur 35 via un bus de communication 36. L'unité de commande 9 est connectée au moteur électrique 8 et au capteur via un autre bus de communication 36. Les actions menées par l'unité de commande 9 sont ordonnées par le microprocesseur 35. Ce dernier produit en réponse aux codes instructions enregistrés dans la mémoire programme 33 des ordres destinés à piloter le motoréducteur 8. Le motoréducteur 8 comporte un résolveur 37, autrement dit, un capteur de position angulaire du rotor du motoréducteur 8.

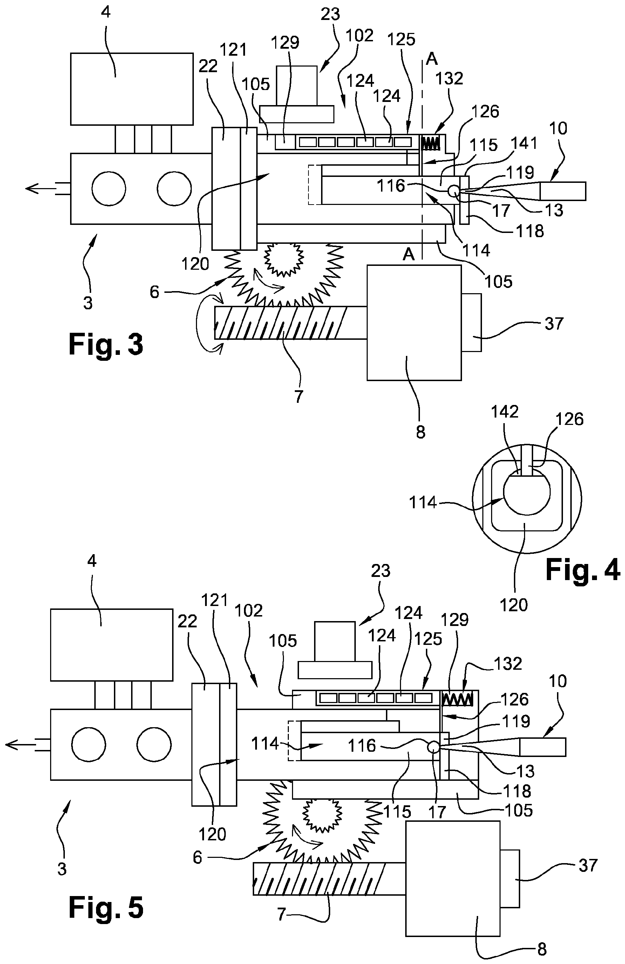

Les figures 3 à 5 illustrent un deuxième mode de réalisation d'un dispositif 101 d'assistance de freinage selon l'invention. Dans cet exemple, seul le servomoteur électrique 102 et la réglette magnétique 125 du dispositif 101 varient par rapport à l'exemple décrit avec les figures 1 et 2.

Plus précisément, le servomoteur 102 comporte un équipage mobile 105 apte à se déplacer en translation dans un mode de fonctionnement dit normal du dispositif 101, le mode étant montré par les figures 3 et 4. Comme dans l'exemple de la figure 1, la translation de l'équipage mobile 105 s'effectue par l'intermédiaire de l'engrenage réducteur 6 à vis sans fin 7.

Le servomoteur 102 comporte également un plongeur 114 dont le corps se présente sous la forme générale d'un cylindre d'axe 0. Le corps du plongeur 114 présente, à une extrémité 115 opposée au maître cylindre 3, un évidement circonférentiel plat 142, un évidement central sphérique 116 et une portion de disque 118 solidaire et concentrique vis-à-vis du corps. L'évidement central 116 est apte à recevoir l'embout 17 de la tige 10. On entend par portion de disque 118 un disque dont une partie circonférentielle est supprimée de façon rectiligne de manière à ce que la portion présente un bord plat 141 coplanaire vis-à-vis de l'évidement circonférentiel plat 142 du corps du plongeur 114. La portion de disque 118 est de préférence de diamètre sensiblement identique au diamètre extérieur d'un corps de valve 120 concentrique au plongeur 114.

Le plongeur 114 est apte à se loger dans un évidement du corps de valve 120, de sorte que le déplacement du corps de valve 120 en direction du maître-cylindre 3 entraîne une interaction d'un palpeur 121 du corps de valve avec le disque de réaction 22 du maître cylindre 3.

Le capteur permet de déterminer, au moyen de l'unité de commande 9, la course différentielle entre le plongeur 114 et le corps de valve 120. Plus précisément, le détecteur 23 du capteur est apte à détecter la présence de cibles ou circuits magnétiques 124, ici au nombre de six, encapsulés dans une réglette magnétique 125.

Cette réglette magnétique 125 est montée solidairement et perpendiculairement à un bras support 126. L'ensemble réglette magnétique 125 et bras support 126 forme un L.

Dans ce mode de réalisation, l'équipage mobile 105 comporte un évidement circonférentiel 129 parallèle à l'axe O et apte à recevoir la réglette 125 dans toute sa longueur et toute son épaisseur.

Un ressort de rappel 132 est placé entre une extrémité de l'évidement 129 et le bras support 126. Un orifice rectangulaire 130 est aménagé dans une paroi 131 de l'équipage mobile 105, la paroi séparant le corps de valve 120 de la réglette magnétique 125. L'orifice 130 présente une largeur adaptée pour recevoir le bras support 126 et une longueur correspondant à un débattement de la réglette 125 au sein de l'évidement 129.

Lorsque le plongeur 114 est en translation dans une direction opposée au maître cylindre 3, le bras support 126 sert de butée au plongeur, le contact entre le bras support et le plongeur ayant lieu à l'extrémité de l'évidement circonférentiel plat 142.

Un avantage important de l'invention est qu'il est compatible avec le mode dit « push through ». En effet, en cas de panne d'assistance, il est nécessaire de procurer malgré tout au conducteur un système de freinage. Pour palier à ce problème, il est prévu dans l'invention que le corps de valve soit poussé à travers l'équipage mobile 5 devenu immobile, comme le montrent les figures 2 et 5, par un effort appliqué sur la tige de commande par le conducteur, lors d'une sollicitation de la pédale de frein. Le déplacement du plongeur sous l'action de la tige de commande entraîne le corps de valve en translation. Ce déplacement du corps de valve transmet l'effort reçu par la tige de commande au disque de réaction du maître cylindre.

Un deuxième avantage de l'invention est de permettre un assemblage et un démontage du capteur de position de manière plus facile. Un autre avantage de l'invention est de permettre une plus grande liberté au concepteur de ce type de dispositif, notamment en termes de design des différentes pièces structurelles. En effet, le fait de placer le détecteur à l'extérieur du dispositif permet de gagner de la place pour un agencement structurel différent des éléments le constituant. Un avantage supplémentaire de l'invention est de diminuer les coûts de conception. Enfin, le fait de rendre le détecteur solidaire du corps du servomoteur permet de gagner en robustesse.

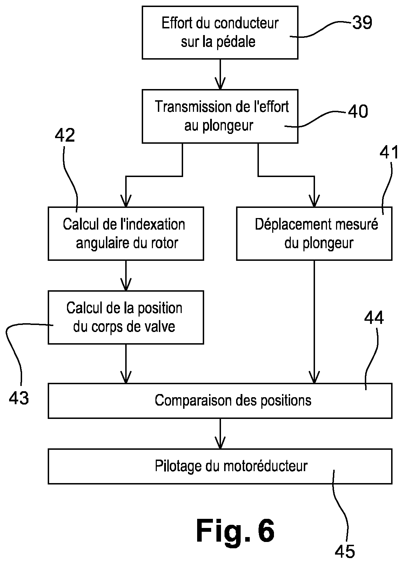

La figure 6 représente, sous forme d'un logigramme, un mode de réalisation du procédé selon l'invention.

Dans une première phase, le conducteur sollicite 39 la pédale de frein du véhicule. Pour cela, il applique un effort sur la pédale. Cet effort est alors transmis 40 par la tige de commande au plongeur. Durant cette première phase, aucune pression n'apparaît dans le maître cylindre.

Dans une deuxième phase, du fait du déplacement du plongeur en direction du maître cylindre, le capteur détecte la présence d'un premier circuit magnétique. La détection de ce circuit magnétique permet à l'unité de commande de déterminer à une étape 41, la position exacte du plongeur.

L'unité de commande détermine à ce même instant t, à une étape 42, une indexation angulaire exacte du rotor du motoréducteur. Cette indexation angulaire est déterminée au moyen du résolveur qui transmet à l'unité de commande l'angle de rotation du rotor par rapport à un index initial prédéterminé.

Lorsque cet angle est connu, il est alors possible de déterminer, à une étape 43, la position de l'équipage mobile, du fait de la connaissance préalable du rapport de transmission du réducteur. Dans l'invention, l'équipage mobile est prévu comme étant un cylindre creux, ouvert de part en part, de sorte qu'une poussée du plongeur, en direction du maître cylindre, entraîne une extraction du corps de valve de son logement formé par l'équipage mobile. Le corps de valve est solidaire au disque formant le palpeur. Ce disque formant le palpeur est de diamètre supérieur au diamètre externe de l'équipage mobile et sert de butée au corps de valve. Ainsi, lorsque l'équipage mobile se déplace en direction du maître cylindre, il entraîne avec lui du fait de son interaction sur le palpeur le corps de valve.

Il est alors possible pour l'unité de commande de déterminer avec précision la position du corps de valve et de comparer à une étape 44, la position du plongeur avec celle du corps de valve.

A une étape, l'unité de commande pilote 45 le motoréducteur en fonction de l'effort appliqué par le conducteur sur la pédale de frein. L'effort appliqué sur la pédale de frein, entraîne un déplacement de la réglette magnétique en direction du maître cylindre, ce déplacement de la réglette entraînant un asservissement de la position de l'équipage mobile, en fonction de la détermination de la position du plongeur par rapport au corps de valve. Cette deuxième phase prend fin lorsque le palpeur vient en contact avec le disque de réaction.

Dans une troisième phase, la poussée du palpeur au contact du disque de réaction entraîne une pression en sortie du maître cylindre proportionnelle à l'effort d'entrée appliqué sur la pédale de frein.

Dans une quatrième phase, l'équipage mobile atteint sa position axiale maximale en direction du maître cylindre. Dans un tel cas, l'équipage mobile ne peut plus avancer et seul un effort supplémentaire fourni par le conducteur sur la tige de commande peut être transmis au maître cylindre.

Dans une cinquième et dernière phase, le conducteur relâche partiellement ou totalement la pédale de frein. Dans ce cas, la tige de commande revient en direction de sa position de repos. Le détecteur quant à lui détecte la nouvelle position de la réglette magnétique et transmet cette position à l'unité de commande. L'unité de commande 9 régule la position de l'équipage mobile en fonction de la position du plongeur. Dans le mode réalisation représenté aux figures 1 et 2, le déplacement de l'équipage mobile, ramène avec lui la tige de commande en direction de la pédale de frein, et déplace en même temps le corps de valve.

L'invention prévoit qu'à chaque démarrage du véhicule, une étape de contrôle préliminaire appelée « pre-drive check » soit réalisée pour permettre au moteur de redéfinir son zéro en enlevant un décalage existant et de prendre le zéro du capteur en même temps.

## Revendications

1. Dispositif (1 ; 101) d'assistance au freinage pour véhicule automobile comportant un maître cylindre (3), une tige de commande (10), un équipage mobile (5 ; 105) et un corps de valve (20 ; 120) recevant un plongeur (14 ; 114), dans lequel
- l'équipage est un cylindre creux adapté à être mu en translation par un motoréducteur (8), via une vis sans fin (7) et un engrenage réducteur (6),
- le plongeur est adapté à être mu en translation par la tige reliée à une pédale de frein (12) destinée à être actionnée par un conducteur (38),
- à son extrémité opposée à la tige, le corps de valve comporte un palpeur (21 ; 121) adapté à appuyer sur un disque de réaction (22) du maître cylindre de manière à augmenter une pression hydraulique dans le maître cylindre, cette augmentation pilotant le freinage,
- un capteur de position du plongeur comporte un détecteur (23) fixé sur une partie immobile du véhicule et une cible (24 ; 124) entraînée par l'équipage (5, 105),
- une unité de commande (9) adaptée à calculer (43) une position du corps de valve (20, 120) et à piloter le palpeur (21, 121) en fonction de cette position,
**caractérisé en ce que**
- le capteur est un capteur à effet Hall adapté à mesurer (41) la vitesse et l'amplitude de déplacement du plongeur (14),
- l'unité de commande (9) est en outre adaptée à
- calculer (42) une indexation angulaire d'un rotor du motoréducteur et à utiliser un rapport de transmission prédéterminé du réducteur (8) pour en déduire la position du corps de valve (20, 120),
- comparer (44) la position du plongeur (14, 114) et la position du corps de valve (20, 120), et
- piloter (45) en fonction de la comparaison et de la vitesse de déplacement le motoréducteur (8).

2. Dispositif selon la revendication 1,
**caractérisé en ce que**
- le palpeur présente un diamètre sensiblement identique à un diamètre extérieur de l'équipage mobile de manière à s'interposer entre l'équipage mobile et le maître cylindre,
- la cible est fixée sur le plongeur et comporte au moins un circuit magnétique (24 ; 124) adapté à la spectrométrie de rétrodiffusion Rutherford (RBS),
- le capteur est adapté à la technologie multivariable digitale (MVD) et à la spectrométrie de rétrodiffusion Rutherford de manière à localiser le circuit magnétique.

3. Dispositif selon la revendication 2,
**caractérisé en ce que**
- le circuit magnétique est encapsulé dans une réglette (25; 125) montée solidairement à un bras support (26 ; 126), la réglette s'étendant suivant un axe parallèle à un axe central (O) suivant lequel s'étendent l'équipage mobile, le corps de valve, le plongeur et la tige de commande,
- le disque de réaction, le palpeur et le bras sont perpendiculaires à l'axe,
- le plongeur comporte à une première extrémité (15 ; 115), opposée au maître cylindre, un évidement central sphérique (16 ; 116) passant par l'axe central du plongeur, l'évidement étant apte à recevoir un embout sphérique (17) de la tige,
- le plongeur comporte en outre, à cette même extrémité, au moins une portion d'un disque (18) concentrique par rapport au plongeur et de diamètre sensiblement identique à un diamètre extérieur du corps de valve, le disque comportant un alésage central (19 ; 119) permettant de laisser traverser une extrémité (13), opposée à la pédale de frein, de la tige de commande.

4. Dispositif selon l'une des revendications 2 à 3,
**caractérisé en ce que**
- l'équipage mobile comporte un évidement circonférentiel (129) apte à recevoir la réglette dans toute sa longueur et toute son épaisseur,
- un ressort de rappel (132) est placé entre une extrémité de l'évidement et le bras support,
- un orifice rectangulaire (130) est aménagé dans une paroi (131) de l'équipage mobile, la paroi séparant le corps de valve de la réglette,
- l'orifice présente une largeur adaptée correspondant à une largeur du bras support et une longueur correspondant à un débattement de la réglette au sein de l'évidement.

5. Dispositif selon l'une des revendications 3 à 4,
**caractérisé en ce que**
- le plongeur présente, à l'extrémité opposée au maître cylindre, un évidement circonférentiel plat (142),
- une partie circonférentielle du disque du plongeur est supprimée de façon rectiligne de manière à ce que le disque présente un bord plat (141) coplanaire vis-à-vis de l'évidement circonférentiel plat,
- lorsque le plongeur est en translation dans une direction opposée au maître cylindre, le bras support sert de butée au plongeur, le contact entre le bras support et le plongeur ayant lieu à une extrémité de l'évidement.

6. Dispositif selon la revendication 3,
**caractérisé en ce que**
- le bras support est monté solidairement et perpendiculairement à une première extrémité (27) d'une tige de guidage (28), l'ensemble réglette magnétique, bras support et tige de guidage formant un U,
- le plongeur et son disque comportent chacun un alésage (29; 30) excentré par rapport à l'axe central suivant lequel le plongeur et le disque s'étendent, chaque alésage étant apte à recevoir la tige de guidage dans toute sa longueur, le diamètre de l'alésage du disque état inférieur au diamètre de l'alésage du plongeur,
- la tige de guidage (28) comporte à une deuxième extrémité une butée (31) configurée de sorte qu'un ressort de rappel (32) est placé entre la butée et l'alésage du disque,
- lorsque l'équipage est en translation dans une direction opposée au maître cylindre, le bras support sert de butée à l'équipage.

7. Procédé de mise en oeuvre du dispositif selon l'une quelconque des revendications 1 à 6,
**caractérisé en ce que**
- l'indexation angulaire du rotor est calculée en fonction d'un index prédéterminé stocké dans une mémoire de données (34) de l'unité de commande, et d'un angle (Ω) de rotation du rotor mesuré et transmis à l'unité par un résolveur (37),
- le palpeur présente un diamètre sensiblement identique à un diamètre extérieur de l'équipage mobile de manière à s'interposer entre l'équipage mobile et le maître cylindre,
- le pilotage du motoréducteur est configuré de sorte que lorsque le conducteur freine, l'équipage exerce, via le palpeur, une pression adéquate sur le maître cylindre, lorsque le conducteur ne freine pas, l'équipage soit dans une position dite de repos, écartée par rapport au maître cylindre.

## Patentansprüche

1. Bremshilfevorrichtung (1; 101) für ein Kraftfahrzeug, welche einen Hauptzylinder (3), eine Steuerstange (10), ein bewegliches Organ (5; 105) und einen Ventilkörper (20; 120), der einen Kolben (14; 114) aufnimmt, aufweist, wobei
- das Organ ein Hohlzylinder ist, der dafür ausgelegt ist, von einem Getriebemotor (8) über eine Schnecke (7) und ein Untersetzungsgetriebe (6) translatorisch bewegt zu werden,
- der Kolben dafür ausgelegt ist, von der Stange translatorisch bewegt zu werden, die mit einem Bremspedal verbunden (12) ist, das dazu bestimmt ist, von einem Fahrer (38) betätigt zu werden,
- der Ventilkörper an seinem zu der Stange entgegengesetzten Ende einen Taster (21; 121) aufweist, der dafür ausgelegt ist, auf eine Reaktionsscheibe (22) des Hauptzylinders Druck auszuüben, um einen hydraulischen Druck im Hauptzylinder zu erhöhen, wobei diese Erhöhung das Bremsen vorsteuert,
- ein Positionssensor des Kolbens einen Detektor (23), der an einem unbeweglichen Teil des Fahrzeugs befestigt ist, und ein Zielelement (24; 124), das von dem Organ (5; 105) mitgenommen wird, aufweist,
- eine Steuereinheit (9) dafür ausgelegt ist, eine Position des Ventilkörpers (20, 120) zu berechnen (43) und den Taster (21, 121) in Abhängigkeit von dieser Position vorzusteuern,
**dadurch gekennzeichnet, dass**
- der Sensor ein Hall-Sensor ist, der dafür ausgelegt ist, die Geschwindigkeit und die Amplitude der Bewegung des Kolbens (14) zu messen (41),
- die Steuereinheit (9) außerdem dafür ausgelegt ist,
- eine Winkelindexierung eines Rotors des Getriebemotors zu berechnen (42) und ein vorbestimmtes Übersetzungsverhältnis des Getriebes (8) zu verwenden, um daraus die Position des Ventilkörpers (20, 120) abzuleiten,
- die Position des Kolbens (14, 114) und die Position des Ventilkörpers (20, 120) zu vergleichen (44), und
- in Abhängigkeit von dem Vergleich und der Geschwindigkeit der Bewegung den Getriebemotor (8) vorzusteuern (45).

2. Vorrichtung nach Anspruch 1,
**dadurch gekennzeichnet, dass**
- der Taster einen Durchmesser aufweist, der im Wesentlichen mit einem Außendurchmesser des beweglichen Organs identisch ist, so dass er zwischen das bewegliche Organ und den Hauptzylinder gelangt,
- das Zielelement an dem Kolben befestigt ist und wenigstens einen Magnetkreis (24; 124) aufweist, der für die Rutherford-Rückstreu-Spektrometrie (RBS) ausgelegt ist,
- der Sensor für die multivariable digitale (MVD) Technologie und für die Rutherford-Rückstreu-Spektrometrie ausgelegt ist, um den Magnetkreis zu lokalisieren.

3. Vorrichtung nach Anspruch 2,
**dadurch gekennzeichnet, dass**
- der Magnetkreis in eine Leiste (25; 125) eingekapselt ist, die fest an einem Stützarm (26,; 126) angebracht ist, wobei sich die Leiste entlang einer Achse erstreckt, die zu einer Mittelachse (O) parallel ist, entlang welcher sich das bewegliche Organ, der Ventilkörper, der Kolben und die Steuerstange erstrecken,
- die Reaktionsscheibe, der Taster und der Arm senkrecht zu der Achse sind,
- der Kolben an einem ersten Ende (15; 115), das dem Hauptzylinder gegenüberliegt, eine kugelförmige zentrale Ausnehmung (16; 116) aufweist, die durch die Mittelachse des Kolbens verläuft, wobei die Ausnehmung geeignet ist, ein kugelförmiges Endstück (17) der Stange aufzunehmen,
- der Kolben außerdem an demselben Ende wenigstens einen Abschnitt einer Scheibe (18) aufweist, die bezüglich des Kolbens konzentrisch ist und einen Durchmesser hat, der im Wesentlichen identisch mit einem Außendurchmesser des Ventilkörpers ist, wobei die Scheibe eine zentrale Bohrung (19; 119) aufweist, die von einem zu dem Bremspedal entgegengesetzten Ende (13) der Steuerstange durchquert werden kann.

4. Vorrichtung nach einem der Ansprüche 2 bis 3,
**dadurch gekennzeichnet, dass**
- das bewegliche Organ eine umlaufende Ausnehmung (129) aufweist, die geeignet ist, die Leiste in ihrer gesamten Länge und ihrer gesamten Dicke aufzunehmen,
- eine Rückholfeder (132) zwischen einem Ende der Ausnehmung und dem Stützarm angeordnet ist,
- eine rechteckige Öffnung (130) in einer Wand (131) des beweglichen Organs angeordnet ist, wobei die Wand den Ventilkörper von der Leiste trennt,
- die Öffnung eine angepasste Breite aufweist, die einer Breite des Stützarmes entspricht, und eine Länge, die einer Auslenkung der Leiste im Inneren der Ausnehmung entspricht.

5. Vorrichtung nach einem der Ansprüche 3 bis 4,
**dadurch gekennzeichnet, dass**
- der Kolben an dem Ende, das dem Hauptzylinder gegenüberliegt, eine flache umlaufende Ausnehmung (142) aufweist,
- ein umlaufender Teil der Scheibe des Kolbens geradlinig abgeschnitten ist, derart, dass die Scheibe einen flachen Rand (141) aufweist, der koplanar mit der flachen umlaufenden Ausnehmung ist,
- wenn der Kolben eine Translation in einer zu dem Hauptzylinder entgegengesetzten Richtung ausführt, der Stützarm als Anschlag für den Kolben dient, wobei der Kontakt zwischen dem Stützarm und dem Kolben an einem Ende der Ausnehmung stattfindet.

6. Vorrichtung nach Anspruch 3,
**dadurch gekennzeichnet, dass**
- der Stützarm fest an und senkrecht zu einem ersten Ende (27) einer Führungsstange (28) angebracht ist, wobei die aus magnetischer Leiste, Stützarm und Führungsstange bestehende Anordnung ein "U" bildet,
- der Kolben und seine Scheibe jeweils eine Bohrung (29; 30) aufweisen, die bezüglich der Mittelachse, entlang welcher sich der Kolben und die Scheibe erstrecken, exzentrisch ist, wobei jede Bohrung geeignet ist, die Führungsstange in ihrer gesamten Länge aufzunehmen, wobei der Durchmesser der Bohrung der Scheibe kleiner als der Durchmesser der Bohrung des Kolbens ist,
- die Führungsstange (28) an einem zweiten Ende einen Anschlag (31) aufweist, der derart ausgebildet ist, dass eine Rückholfeder (32) zwischen dem Anschlag und der Bohrung der Scheibe angeordnet ist,
- wenn das bewegliche Organ eine Translation in einer zu dem Hauptzylinder entgegengesetzten Richtung ausführt, der Stützarm als Anschlag für das bewegliche Organ dient.

7. Verfahren zum Einsatz der Vorrichtung nach einem der Ansprüche 1 bis 6,
**dadurch gekennzeichnet, dass**
- die Winkelindexierung des Rotors in Abhängigkeit von einem vorbestimmten Index, der in einem Datenspeicher (34) des Steuereinheit gespeichert ist, und von einem Rotationswinkel (Ω) des Rotors, der von einem Resolver (37) gemessen und zu der Steuereinheit übertragen wird, berechnet wird,
- der Taster einen Durchmesser aufweist, der im Wesentlichen mit einem Außendurchmesser des beweglichen Organs identisch ist, so dass er zwischen das bewegliche Organ und den Hauptzylinder gelangt,
- die Vorsteuerung des Getriebemotors derart gestaltet ist, dass,
wenn der Fahrer bremst, das bewegliche Organ über den Taster einen erforderlichen Druck auf den Hauptzylinder ausübt,
wenn der Fahrer nicht bremst, das bewegliche Organ sich in einer sogenannten Ruheposition befindet, die vom Hauptzylinder entfernt ist.

## Claims

1. Brake assist device (1; 101) for a motor vehicle comprising a master cylinder (3), a control rod (10), a mobile unit (5; 105) and a valve body (20; 120) receiving a plunger (14; 114), in which
- the unit is a hollow cylinder designed to be moved in translation by a gear motor (8), via a worm screw (7) and a reducing gear (6),
- the plunger is designed to be moved in translation by the rod linked to a brake pedal (12) intended to be actuated by a driver (38),
- at its end opposite the rod, the valve body comprises a feeler (21; 121) designed to press on a reaction disk (22) of the master cylinder so as to increase a hydraulic pressure in the master cylinder, this increase controlling the braking,
- a plunger position sensor comprises a detector (23) fixed onto an immobile part of the vehicle and a target (24; 124) driven by the unit (5, 105),
- a control unit (9) designed to compute (43) a position of the valve body (20, 120) and to control the feeler (21, 121) as a function of this position, **characterized in that**
- the sensor is a Hall effect sensor designed to measure (41) the speed and the amplitude of displacement of the plunger (14),
- the control unit (9) is also designed to
- compute (42) an angular indexing of a rotor of the gear motor and to use a predetermined gear ratio of the reducing gear (8) to deduce therefrom the position of the valve body (20, 120),
- compare (44) the position of the plunger (14, 114) and the position of the valve body (20, 120), and
- control (45) the gear motor (8) as a function of the comparison and of the speed of displacement.

2. Device according to Claim 1,
**characterized in that**
- the feeler has a diameter substantially identical to an outer diameter of the mobile unit so as to be interposed between the mobile unit and the master cylinder,
- the target is fixed onto the plunger and comprises at least one magnetic circuit (24; 124) designed for Rutherford backscattering spectrometry (RBS),
- the sensor is designed for multivariable digital (MVD) technology and for Rutherford backscattering spectrometry so as to locate the magnetic circuit.

3. Device according to Claim 2,
**characterized in that**
- the magnetic circuit is encapsulated in a strip (25; 125) securely mounted to a support arm (26; 126), the strip extending along an axis parallel to a central axis (O) along which the mobile unit, the valve body, the plunger and the control rod extend,
- the reaction disk, the feeler and the arm are at right angles to the axis,
- the plunger comprises a first end (15; 115), opposite the master cylinder, a spherical central void (16; 116) passing through the central axis of the plunger, the void being capable of receiving a spherical endpiece (17) of the rod,
- the plunger further comprises, at this same end, at least one portion of a disk (18) that is concentric in relation to the plunger and of a diameter substantially identical to an outer diameter of the valve body, the disk comprising a central bore (19; 119) making it possible to allow the passage of an end (13), opposite the brake pedal, of the control rod.

4. Device according to one of Claims 2 and 3,
**characterized in that**
- the mobile unit comprises a circumferential void (129) capable of receiving the strip in all its length and all its thickness,
- a return spring (132) is placed between an end of the void and the support arm,
- a rectangular orifice (130) is formed in a wall (131) of the mobile unit, the wall separating the valve body from the strip,
- the orifice has an adapted width corresponding to a width of the support arm and a length corresponding to a travel of the strip in the void.

5. Device according to one of Claims 3 and 4,
**characterized in that**
- the plunger has, at the end opposite the master cylinder, a flat circumferential void (142),
- a circumferential part of the disk of the plunger is eliminated rectilinearly so that the disk has a flat edge (141) coplanar with respect to the flat circumferential void,
- when the plunger is in translation in a direction opposite to the master cylinder, the support arm serves as abutment for the plunger, the contact between the support arm and the plunger taking place at an end of the void.

6. Device according to Claim 3,
**characterized in that**
- the support arm is mounted securely and at right angles to a first end (27) of a guiding rod (28), the magnetic strip, support arm and guiding rod assembly forming a U,
- the plunger and its disk each comprise a bore (29; 30) that is eccentric relative to the central axis along which the plunger and the disk extend, each bore being capable of receiving the guiding rod in all its length, the diameter of the bore of the disk being smaller than the diameter of the bore of the plunger,
- the guiding rod (28) comprises, at a second end, an abutment (31) configured in such a way that a return spring (32) is placed between the abutment and the bore of the disk,
- when the unit is in translation in a direction opposite to the master cylinder, the support arm serves as abutment for the unit.

7. Method for implementing the device according to any one of Claims 1 to 6,
**characterized in that**
- the angular indexing of the rotor is calculated as a function of a predetermined index stored in a data memory (34) of the control unit, and of an angle (Ω) of rotation of the rotor measured and transmitted to the unit by a resolver (37),
- the feeler has a diameter substantially identical to an outer diameter of the mobile unit so as to be interposed between the mobile unit and the master cylinder,
- the control of the gear motor is configured in such a way that
when the driver brakes, the unit exerts, via the feeler, a suitable pressure on the master cylinder, when the driver does not brake, the unit is in a so-called rest position, separated from the master cylinder.
